# EUROPÄISCHE PATENTSCHRIFT

(11) **EP 0 848 515 B1**
(45) Veröffentlichungstag und Bekanntmachung des Hinweises auf die Patenterteilung: **11.03.2009**
(21) Anmeldenummer: 97117704.3
(22) Anmeldetag: 13.10.1997
(51) Int. Cl.: H04L 1/12, H04B 7/005

(54) **Anordnung zum Optimieren der Datenübertragung über einen bidirektionalen Funkkanal**
System for optimising data transmission over a bidirectional radio channel
Dispositif pour optimiser la transmission de données sur un canal radio bidirectionnel

(30) Priorität: 11.12.1996 DE 19651593
(43) Veröffentlichungstag der Anmeldung: 17.06.1998
(73) Patentinhaber: Rohde & Schwarz GmbH & Co. KG, 81671 München (DE)
(72) Erfinder: Dierschedl, Werner, 81245 München (DE); Greubel, Gerhard, 83026 Rosenheim (DE); Maurer, Peter, 85622 Feldkirchen (DE)
(74) Vertreter: Körfer, Thomas

(56) Entgegenhaltungen:
- EP-A- 0 606 016
- WO-A-96/04718
- US-A- 5 214 687
- US-A- 5 241 565
- US-A- 5 541 955

## Beschreibung

Die Erfindung betrifft und geht aus von einer Anordnung laut Oberbegriff des Hauptanspruches.

Eine Anordnung dieser Art ist für den Amateurfunkbereich bekannt (Clover-Verfahren aus CQDL 10/94, S. 709-714). Bei diesem Clover-Verfahren wird mit Hilfe eines bekannten Redundanzüberprüfungsverfahren CRC (Cyclic Redundancy Check) die Zahl der auftretenden Übertragungsfehler empfangsseitig bestimmt, diese Informationen werden an die Gegenstation rückübertragen und erlauben dem System, sich mit der Wahl der Modulationsart an den Funkkanal anzupassen. Außerdem werden an beiden Stationen während der laufenden Verbindung jeweils die Phasenverzerrungen und das SNR (Signal/Rausch-Verhältnis) im empfangenen Signal gemessen. Über das gemessene SNR kann die Senderleistung auf das für eine einwandfreie Übertragung notwendige Maß reduziert werden. Bei üblichen Amateurfunk-Sendern ist keine automatische Steuerung der Leistung des Senders möglich, so daß diese Leistungsreduzierung beim Clover-Verfahren von Hand erfolgen muß.

Weiterhin ist ein Verfahren zur Verbesserung einer Datenübertragung aus "Adaptation of frame length, frequency and bandwidth with automatic HF communications", Greiner G; IEEE Colloquium in Frequency Selection and Management Techniques for HF Communications, London 7-8 Feb. 1996" bekannt. Dieses Verfahren zeigt die Veränderung von einzelnen Parametern zur Verbesserung einer Datenübertragung.

Ein Nachteil des dargestellten Verfahrens ist, dass eine optimale Datenübertragung nicht zuverlässig erzielt werden kann.

Es ist Aufgabe der Erfindung, eine Anordnung zu schaffen, welche eine verbesserte Datenübertragung gewährleistet.

Diese Aufgabe wird mit dem Hauptanspruch 1 durch dessen Merkmale gelöst. Vorteilhafte Weiterbildungen ergeben sich aus den Unteransprüchen.

Bei der erfindungsgemäßen Anordnung erfolgt die Auswahl aus vier verschiedenen senderseitigen Einstellgrößen, von denen jede Einfluß auf die Qualität der Datenübertragung hat, und zwar erfolgt die Auswahl jeweils in Abhängigkeit von der gleichen empfangsseitigen Meßgröße, nämlich der über das CRC-Verfahren bestimmten Fehlerrate. Bei der erfindungsgemäßen Anordnung muß also nur eine Meßgröße von der Empfangsseite zur Gegenstation rückübertragen werden, dadurch ergibt sich ein einfacher Gesamtaufbau und Fehlsteuerungen werden weitgehendst vermieden. Welche der vier Einstellgrößen
a) Größe der aus mehreren Frames bestehenden Datenpakete
b) Verschiedene höherwertige Modulationsverfahren
c) Coderate der Vorwärts-Fehlerkorrektur FEC
d) Ausgangsleistung des Senders
bei Feststellung einer Verschlechterung der Datenübertragung und damit Änderung der Fehlerrate jeweils geändert wird, richtet sich einerseits danach, welche dieser Einstellgrößen ausgehend von der derzeit gewählten Einstellung noch zu einer die Datenübertragung verbessernden Größe geändert werden kann. Die Reihenfolge der Änderung der Einstellgrößen a) bis d) hängt vom jeweiligen Anwendungsfall ab und ist in der senderseitigen Steuerschaltung vorgegeben. Die jeweilige Änderung der Einstellgrößen erfolgt senderseitig vollständig automatisch nur in Abhängigkeit von der rückübertragenen Fehlerrate.

Die Erfindung wird im folgenden anhand eines Prinzipschaltbildes an einem Ausführungsbeispiel näher erläutert.

Die Fig. zeigt die senderseitige Datenaufbereitung bei einem bidirektionalen Funkkanal, die zu übertragenden digitalen Daten werden in bekannter Weise auf einzelne Pakete aufgeteilt, die sukzessive dem Sender zugeführt und über den Funkkanal zur Gegenstation übertragen werden. Die Pakete setzen sich aus einer variablen Anzahl von Frames zusammen, die Anzahl der Frames pro Paket hängt von der Güte der Funkverbindung ab und liegt beispielsweise zwischen 1 und 15. Jeder Frame besteht seinerseits aus einem beispielsweise 5 Byte langen Haeder aus Kontroll- und Steuerinformationen, einem anschließenden beispielsweise zwischen 4 und 250 Byte langem Datenanteil und einem beispielsweise 2 Byte langen Redundanzcode (CRC). Durch Wahl der Datenmenge je Frame und Wahl der Anzahl der Frames in einem Paket kann somit senderseitig die Paketgröße beliebig beispielsweise zwischen 64 Byte und 8 kByte bewählt werden.

Außerdem sind senderseitig beliebige höherwertige Modulationsarten (wie sie beispielsweise beschrieben sind in Meinke/Gundlach, Taschenbuch der Hochfrequenztechnik, 5. Aufl., Kap. O15 bis O29) einstellbar, beispielsweise 2PSK, 4PSK oder 8PSK (PSK = Phase-Shift-Keying, Phasenumtastung). Die Art der verschiedenen wählbaren Modulationsarten hängt vom jeweiligen Anwendungsfall ab, es ist nur erforderlich, daß jeweils verschiedene Modulationsarten zur Verfügung stehen, mit denen sich steigernde Datenraten möglich sind.

Außerdem ist senderseitig die Coderate der FEC beispielsweise zwischen dem schlechtesten Wert von 1/2 in Schritten über 2/3, 5/6 bis zur optimalen Coderate 1 wählbar.

Schließlich ist auch noch die Leistung des Hochfrequenzsenders automatisch einstellbar und zwar beispielsweise zwischen einem niedrigsten Wert von beispielsweise 10 Watt über einen Mittelwert zur höchsten Leistung von beispielsweise 100 Watt.

Im Empfänger der nicht dargestellten Gegenstation der Duplex-Übertragungsstrecke wird in bekannter Weise mit Hilfe der CRC ein Prüfsummenwert bestimmt, der ein Maß für die Anzahl der auftretenden Übertragungsfehler ist. Auf diese Weise wird empfangsseitig festgestellt, ob die Fehlerrate der Übertragungsstrecke einen vorbestimmten Wert überschreitet oder unterschreitet. Diese Information über die Übertragungsqualität wird zum Sender der Gegenstation übertragen und dient dort zur Auswahl der jeweils günstigsten Paketgröße, Modulationsart, Coderate der FEC bzw. Leistung, um so bei einer eventuellen Verschlechterung der Übertragungsqualität des Funkkanals durch entsprechende Änderung mehrerer dieser Einstellgrößen die Übertragungsqualität wieder zu verbessern oder umgekehrt bei sehr guter Übertragungsqualität d.h. geringer Fehlerrate mehrere dieser Einstellgrößen so zu ändern , daß mit erhöhter Datenrate Nutzdaten übertragen werden können.

Beim Aufbau der Verbindung werden zunächst Mittelwerte der wählbaren Einstellgrößen eingestellt, beispielsweise eine mittelere Paketgröße, die Modulationsart 8PSK, eine FEC-Coderate von 1/2 und die höchste Senderleistung.

Wird bei einer an die erfindungsgemäße Anordnung angelehnten Anordnung hierbei festgestellt, daß die Fehlerrate einen vorgegebenen Wert überschreitet, so wird automatisch die Paketgröße verringert und/oder die Modulationsart auf 4PSK oder sogar 2PSK herabgesetzt. In diesem Beispiel kann über die Coderate und die Leistung die Datenrate nicht verbessert werden, da diese Einstellgrößen bereits ihren optimalen Wert einnehmen. Wenn jedoch festgestellt wird, daß sich die Qualität der Übertragungsstrecke wieder bessert, so wird automatisch von der herabgesetzten Modulationsart 4PSK auf die höherwertige Modulationsart 8PSK hochgeschaltet, gleichzeitig wird auch die Paketgröße vergrößert, auch die FEC-Coderate kann auf 2/3 oder 5/6 vergrößert werden und auch die Hochfrequenzleistung des Senders kann von ihrem höchsten Wert auf einen Mittelwert oder sogar den niedrigsten Wert heruntergeregelt werden. All dies erfolgt automatisch.

Mit einer erfindungsgemäßen Anordnung kann automatisch die Datenrate beispielsweise zwischen 900 bit/s und 5400 bit/s optimal an die jeweilige Qualität des Funkkanals angepaßt werden und zwar durch entsprechende Wahl der vier Einstellgrößen.

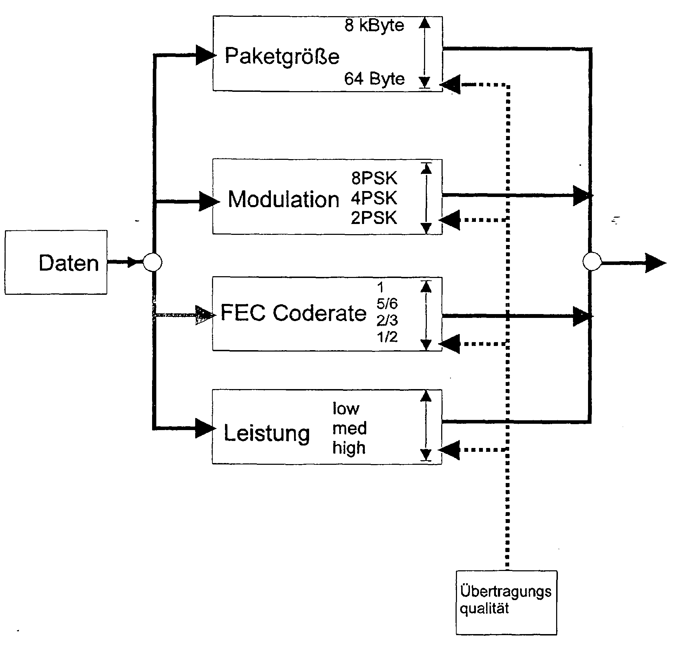

## Patentansprüche

1. Anordnung zum Optimieren der Datenübertragung über einen bidirektionalen Funkkanal, bei dem senderseitig jeweils verschiedene Modulationsarten wählbar sind und die Coderate der Vorwärts-Fehlerkorrektur (FEC) sowie die Senderleistung einstellbar ist,
wobei bei dem Funkkanal empfangsseitig jeweils Einrichtungen (CRC) zum Bestimmen der Fehlerrate vorgesehen sind,
wobei die Anordnung derart ausgebildet ist, dass jeweils senderseitig in Abhängigkeit von der rückübertragenen Fehlerrate automatisch in einer in einer senderseitigen Steuerschaltung vorgegebenen Reihenfolge die Größe der Datenpakete und die Coderate so geändert wird, dass empfangsseitig eine vorbestimmte Fehlerrate erreicht wird, wobei dann, wenn die Fehlerrate einen vorbestimmten Wert überschreitet, senderseitig automatisch die Paketgröße verringert und auf eine geringere Coderate umgeschalten wird, und bei Unterschreitung des vorbestimmten Werts der Fehlerrate umgekehrt vorgegangen wird.

2. Anordnung nach Anspruch 1,
**dadurch gekennzeichnet,**
**dass** die Anordnung derart ausgebildet ist, dass jeweils senderseitig in Abhängigkeit von der rückübertragenen Fehlerrate automatisch in einer in der senderseitigen Steuerschaltung vorgegebenen Reihenfolge zusätzlich die Modulationsart so geändert wird, dass empfangsseitig eine vorbestimmte Fehlerrate erreicht wird.

3. Anordnung nach Anspruch 2,
**dadurch gekennzeichnet,**
**dass** die Anordnung derart ausgebildet ist, dass dann, wenn die Fehlerrate einen vorbestimmten Wert überschreitet, senderseitig zunächst automatisch auf eine geringerwertige Modulationsart umgeschalten wird, und bei Unterschreitung des vorbestimmten Werts der Fehlerrate umgekehrt vorgegangen wird.

4. Anordnung nach einem der Ansprüche 1 bis 3,
**dadurch gekennzeichnet,**
**dass** die Anordnung derart ausgebildet ist, dass jeweils senderseitig in Abhängigkeit von der rückübertragenen Fehlerrate automatisch in einer in der senderseitigen Steuerschaltung vorgegebenen Reihenfolge zusätzlich die Senderleistung so geändert wird, dass empfangsseitig eine vorbestimmte Fehlerrate erreicht wird.

5. Anordnung nach Anspruch 4,
**dadurch gekennzeichnet,**
**dass** die Anordnung derart ausgebildet ist, dass dann, wenn die Fehlerrate einen vorbestimmten Wert überschreitet, senderseitig zunächst automatisch auf eine höhere Leistung umgeschalten wird, und bei Unterschreitung des vorbestimmten Werts der Fehlerrate umgekehrt vorgegangen wird.

## Claims

1. Arrangement for optimising data transmission via a bi-directional radio channel, in which respectively at the transmitter end, different modulation types can be selected, and the code rate of the forward error correction (FEC) and the transmitter power can be adjusted,
wherein devices (CRC) for determining the error rate are provided respectively at the receiver end in the radio channel,
wherein the arrangement is designed in such a manner that the size of the data packets and the code rate is automatically modified respectively at the transmitter end in a sequence specified in a transmitter-end control circuit dependent upon the told-back error rate in such a manner that a predetermined error rate is achieved at the receiver end,
wherein the packet size is automatically reduced, and a switchover to a lower code rate is implemented at the transmitter end when the error rate exceeds a predetermined value, and a reverse procedure is implemented when the error rate falls below the predetermined value.

2. Arrangement according to claim 1,
**characterised in that**
the arrangement is designed in such a manner that the modulation type is additionally automatically modified respectively at the transmitter end in the sequence specified in the transmitter-end control circuit dependent upon the told-back error rate in such a manner that a predetermined error rate is achieved at the receiver end.

3. Arrangement according to claim 2,
**characterised in that**
the arrangement is designed in such a manner that when the error rate exceeds a predetermined value, a switchover to a lower-value modulation type is initially implemented automatically at the transmitter end, and a reverse procedure is implemented when the error rate falls below the predetermined value.

4. Arrangement according to any one of claims 1 to 3,
**characterised in that**
the arrangement is designed in such a manner that the transmitter power is additionally automatically modified respectively at the transmitter end in the sequence specified in the transmitter-end control circuit dependent upon the told-back error rate in such a manner that a predetermined error rate is achieved at the receiver end.

5. Arrangement according to claim 4,
**characterised in that**
the arrangement is designed in such a manner that when the error rates exceeds a predetermined value, a switchover to a higher power is initially implemented automatically at the transmitter end, and a reverse procedure is implemented when the error rate falls below the predetermined value.

## Revendications

1. Dispositif pour optimiser la transmission de données sur un canal radio bidirectionnel, par lequel des types de modulation différents sont à chaque fois sélectionnables du côté émetteur et le débit de code de la correction d'erreurs sans voie de retour (FEC) ainsi que la puissance d'émission sont réglables,
dans lequel des dispositifs côté réception du canal radio (CRC) sont prédisposés chacun pour la détermination du taux d'erreurs,
dans lequel le dispositif est formé de telle manière qu'à chaque fois du côté émetteur, en fonction du taux d'erreur transmis en retour, la taille du paquet de données et le débit de code soient modifiés automatiquement dans un ordre prédéterminé dans une commutation de commande de telle manière qu'un taux d'erreurs prédéterminé soit atteint du côté réception,
dans lequel ensuite, quand le taux d'erreurs dépasse une valeur prédéterminée, la taille de paquet est diminuée et il est commuté sur un débit de code réduit automatiquement du côté émetteur, et est traité inversement quand il reste inférieur à la valeur prédéterminée du taux d'erreurs.

2. Dispositif selon la revendication 1,
**caractérisé en ce**
**que** le dispositif est formé de telle manière qu'à chaque fois du côté émetteur, en fonction du taux d'erreur transmis en retour, le type de modulation soit également modifié automatiquement dans un ordre prédéterminé dans une commutation de commande de telle manière qu'un taux d'erreurs prédéterminé soit atteint du côté réception.

3. Dispositif selon la revendication 2,
**caractérisé en ce**
**que** le dispositif est formé de telle manière que, quand le taux d'erreurs dépasse une valeur prédéterminée, il soit successivement commuté automatiquement du côté émetteur sur un type de modulation de valeur inférieure, et soit traité inversement quand il reste inférieur à la valeur prédéterminée du taux d'erreurs.

4. Dispositif selon l'une quelconque des revendications 1 à 3,
**caractérisé en ce**
**que** le dispositif est formé de telle manière qu'à chaque fois du côté émetteur, en fonction du taux d'erreur transmis en retour, la puissance d'émission soit également modifiée automatiquement dans un ordre prédéterminé dans une commutation de commande de telle manière qu'un taux d'erreurs prédéterminé soit atteint du côté réception.

5. Dispositif selon la revendication 4,
**caractérisé en ce**
**que** le dispositif est formé de telle manière que, quand le taux d'erreurs dépasse une valeur prédéterminée, il soit successivement commuté automatiquement du côté émetteur sur une puissance d'émission supérieure, et soit traité inversement quand il reste inférieur à la valeur prédéterminée du taux d'erreurs.
